# EUROPEAN PATENT SPECIFICATION

(11) **EP 2 511 484 B1**
(45) Date of publication and mention of the grant of the patent: **18.09.2019**
(21) Application number: 12164348.0
(22) Date of filing: 16.04.2012
(51) Int. Cl.: F01D 25/28, F01D 25/16, F02C 7/06

(54) **Front centerbody support for a gas turbine engine**
Halterung des vorderen Zentralkörpers eines Strahltriebwerks
Support de corps central avant pour un turboréacteur

(30) Priority: 15.04.2011 US 201113087579
(43) Date of publication of application: 17.10.2012
(73) Proprietor: United Technologies Corporation, Farmington, CT 06032 (US)
(72) Inventor: Davis, Todd A., Tolland, CT Connecticut 06084 (US); Cigal, Brian P., Windsor, CT Connecticut 06095 (US)
(74) Representative: Dehns

(56) References cited:
- EP-A1- 1 890 054
- EP-A2- 1 876 338
- EP-A2- 2 390 472
- US-A1- 2002 067 870
- US-A1- 2008 014 084
- US-A1- 2010 105 516
- US-A1- 2010 150 702

## Description

### BACKGROUND

The present disclosure relates to a gas turbine engine, and in particular, to a case structure therefor.

Gas turbine engines typically include one or more rotor shafts that transfer power and rotary motion from a turbine section to a compressor section and fan section. The rotor shafts are supported within an engine static structure which is typically constructed of modules with individual case sections which are joined together at bolted flanges. The flanges form a joint capable of withstanding the variety of loads transmitted through the engine static structure.

US 2010/0105516 discloses a star gear train mounted within a gas turbine engine.

### SUMMARY

According to the present invention, there is provided a front center body support assembly having the features of claim 1 and comprising a bearing package and a front center body support for a gas turbine engine, the front center body support comprising: a front center body section defined about an axis; a bearing section defined about said axis; a centering spring mounted within said front center body support, the bearing package being mounted to said centering spring; a flex support mounted within said front center body support; and a frustro-conical interface section defined about said axis, said frustro-conical interface section being between said front center body section and said bearing section; wherein said front center body section includes mount features to receive the flex support, said mount features including a fastener flange, and fasteners threaded into said fastener flange to mount the flex support within the front center body support; said fasteners are accessible from a forward section of the front center body assembly opposite the bearing package of a number two bearing system.

According to a second aspect, the invention provides a method of assembling a gas turbine engine as laid out in claim 12, the method comprising: mounting a flex support within a front center body support having a front center body section defined about an axis; a bearing section defined about said axis; a centering spring mounted within said front center body support, the bearing package being mounted to said centering spring; and a frustro-conical interface section defined about said axis, said frustro-conical interface section being between said front center body section and said bearing section; wherein said front center body section includes mount features to receive the flex support, said mount features including a fastener flange, and fasteners threaded into said fastener flange to mount the flex support within the front center body support; and inserting fasteners into a fastener flange of the front center body support from a forward position of said center body support.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
Figure 1 is a schematic cross-section of a gas turbine engine;
Figure 2 is an enlarged cross-section of a section of the gas turbine engine which illustrates a front center body assembly;
Figure 3 is an enlarged perspective partial cross-section of a front center body support of the front center body assembly; and
Figure 4 is an enlarged sectional view of the front center body support and flexible support mounted therein.

### DETAILED DESCRIPTION

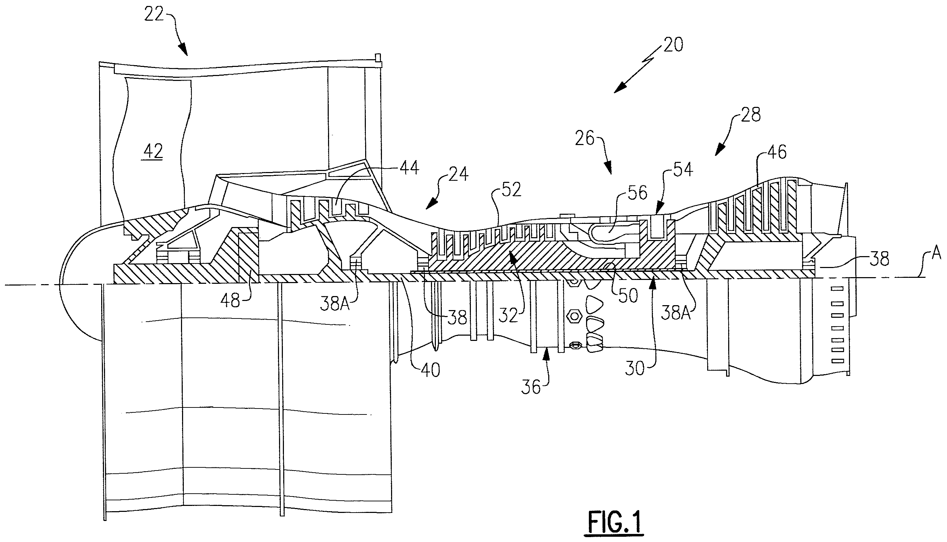

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath while the compressor section 24 drives air along a core flowpath for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines.

The engine 20 generally includes a low speed spool 30 and a high speed spool 32 mounted for rotation about an engine central longitudinal axis A relative to an engine static structure 36 via several bearing systems 38. The low speed spool 30 generally includes an inner shaft 40 that interconnects a fan 42, a low pressure compressor 44 and a low pressure turbine 46. The inner shaft 40 may drive the fan 42 either directly or through a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged between the high pressure compressor 52 and the high pressure turbine 54. The inner shaft 40 and the outer shaft 50 are concentric and rotate about the engine central longitudinal axis A which is collinear with their longitudinal axes.

Core airflow is compressed by the low pressure compressor 44 then the high pressure compressor 52, mixed with the fuel in the combustor 56, then expanded over the high pressure turbine 54 and low pressure turbine 46. The turbines 54, 46 rotationally drive the respective low speed spool 30 and high speed spool 32 in response to the expansion.

The main engine shafts 40, 50 are supported at a plurality of points by the bearing system 38 within the static structure 36. In one non-limiting embodiment, bearing system 38 includes a number two bearing system 38A located within the compressor section 24.

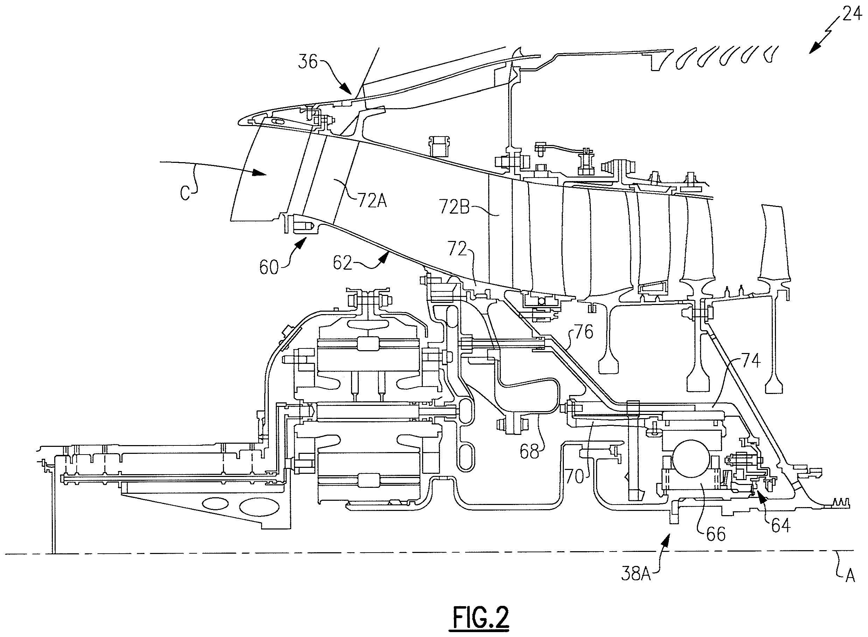

With reference to Figure 2, the engine static structure 36 proximate the compressor section 24 includes a front center body assembly 60. The front center body assembly 60 generally includes a front center body support 62, a seal package 64, a bearing package 66 of the number two bearing system 38A, a flex support 68 and a centering spring 70.

The flex support 68 is a generally cylindrical structure which provides a flexible attachment of the geared architecture 48 within the front center body support 62. That is, the flex support 68 reacts the torsional loads from the geared architecture 48 and facilitates vibration absorption as well as other support functions.

The centering spring 70 is a generally cylindrical cage-like structural component with a multiple of beams which extend between flange end structures. The centering spring 70 facilitates a resilient position of the bearing package 66 with respect to the low speed spool 30. In one embodiment, the beams are double-tapered beams arrayed circumferentially to control a radial spring rate that may be selected based on a plurality of considerations including, but not limited to, bearing loading, bearing life, rotor dynamics, and rotor deflection considerations.

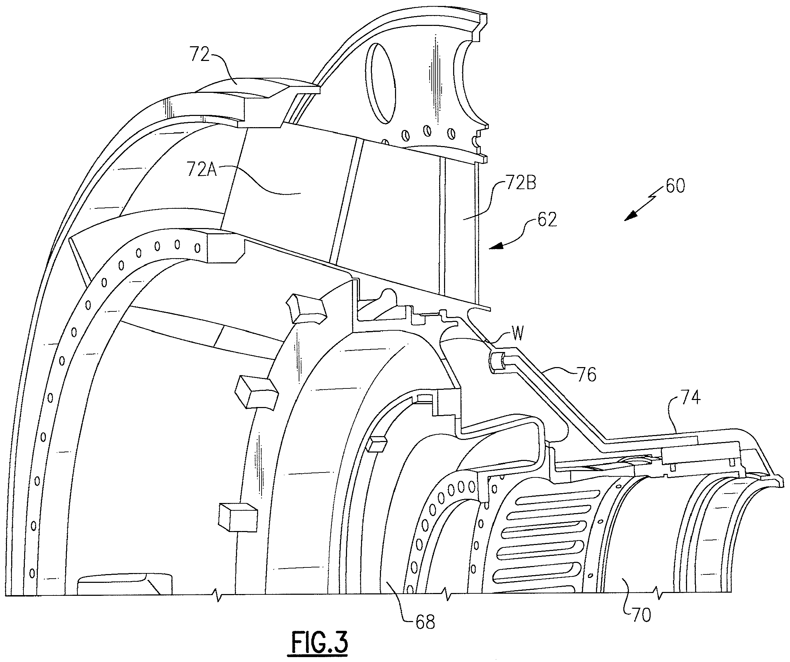

The front center body support 62 includes a front center body section 72 and a bearing section 74 defined about axis A with a frustro-conical interface section 76 therebetween. The front center body section 72 at least partially defines the core flowpath into the low pressure compressor 44. That is the front center body section 72 includes an annular passage with a multiple of front center body vanes 72A, 72B (Figure 3).

The bearing section 74 is defined radially inward of the front center body section 72. The bearing section 74 locates the bearing package 66 and the seal package 64 relative to the low speed spool 30.

The frustro-conical interface section 76 combines the front center body section 72 and the bearing section 74 to form a unified load path, free of kinks typical of a conventional flange joint, from the bearing package 66 to the outer periphery of the engine static structure 36. The frustro-conical interface section 76 may include a weld W or, alternatively, be an integral section such that the front center body support 62 is a unitary component. The integral, flange-less arrangement of the frustro-conical interface section 76 facilitates a light weight, reduced part count arrangement with an increased ability to tune the overall stiffness to achieve rotor dynamic requirements. Such an arrangement also further integrates functions such as oil and air delivery within the bearing compartment which surrounds bearing package 66.

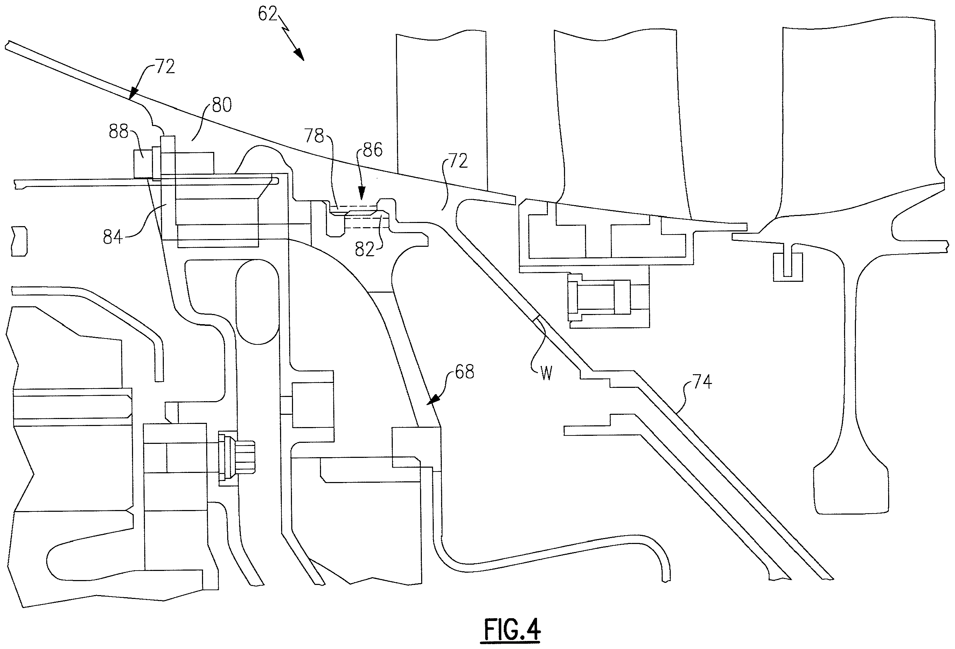

With reference to Figure 4, the front center body support 62 also includes mount features to receive the flex support 68. In one disclosed non-limiting embodiment, the mount features of the front center body support 62 includes an internal spline 78 and a radial inward directed fastener flange 80 on the front center body section 72. The flex support 68 includes a corresponding outer spline 82 and radially outwardly directed fastener flange 84. The flex support 68 is received into the front center body support 62 at a splined interface 86 formed by splines 78, 82 and retained therein such that fastener flange 84 abuts fastener flange 80. A set of fasteners 88 such as bolts are then threaded into the fastener flange 80 to mount the flex support 68 within the front center body support 62.

The arrangement locates the fasteners 88 to provide access from a forward section of the front center body assembly 60 opposite the bearing package 66 of the number two bearing system 38A which facilitates assembly and disassembly.

It should be understood that like reference numerals identify corresponding or similar elements throughout the several drawings. It should also be understood that although a particular component arrangement is disclosed in the illustrated embodiment, other arrangements will benefit herefrom.

Although particular step sequences are shown, described, and claimed, it should be understood that steps may be performed in any order, separated or combined unless otherwise indicated and will still benefit from the present invention.

The foregoing description is exemplary rather than defined by the limitations within. Various non-limiting embodiments are disclosed herein, however, one of ordinary skill in the art would recognize that various modifications and variations in light of the above teachings may fall within the scope of the appended claims. It is therefore to be understood that within the scope of the appended claims, the invention may be practiced other than as specifically described. For that reason the appended claims should be studied to determine true scope and content.

## Claims

1. A front center body support assembly for a gas turbine engine (20), the assembly comprising a bearing package (66) of a number two bearing system (38A) and a front center body support (62), the front center body support comprising:
a front center body section (72) defined about an axis (A);
a bearing section (74) defined about said axis;
a centering spring (70) mounted within said front center body support, the bearing package (66) being mounted to said centering spring;
a flex support (68) mounted within said front center body support; and
a frustro-conical interface section (76) defined about said axis, said frustro-conical interface section being between said front center body section and said bearing section; wherein said front center body section (72) includes mount features (78, 80) to receive the flex support (68),
**characterised by** said mount features including a fastener flange (80), and fasteners (88) threaded into said fastener flange (80) to mount the flex support within the front center body support; wherein
said fasteners are accessible from a forward section of the front center body assembly opposite the bearing package.

2. The front center body support assembly as recited in claim 1, wherein said front center body section (72) is welded to said bearing section (74) at a weld (W) within said frustro-conical interface section.

3. The front center body support assembly as recited in claim 1 or 2, wherein said front center body section (72) is radially outward relative to said bearing section (74).

4. The front center body support assembly as recited in claim 1, 2, or 3, wherein said front center body section includes an internal spline (78).

5. The front center body support assembly as recited in any preceding claim, wherein said front center body section defines an annular passage with a multiple of front center body vanes (72A,72B).

6. A gas turbine engine (20) comprising:
the front center body support assembly as recited in any previous claim.

7. The gas turbine engine as recited in claim 6, further comprising a seal package (64) mounted to said front center body support.

8. The gas turbine engine as recited in claim 6 or 7, wherein said front center body support includes a frustro-conical interface section (76) defined about said axis, said frustro-conical interface section being between said front center body section and said bearing section; preferably
further comprising a weld (W) within said frustro-conical interface section.

9. The gas turbine engine as recited in any one of claims 6 to 8, wherein said front center body support includes an internal spline (78) which interfaces with an external spline (82) on said flex support (68); preferably
wherein said front center body support includes an internal flange (80) which abuts an external flange (84) of said flex support; further preferably
further comprising a multiple of fasteners (88) which attach said internal flange to said external flange.

10. The gas turbine engine as recited in any one of claims 6 to 9, wherein said flex support is mounted to a geared architecture (48).

11. The gas turbine engine as recited in claim 10, wherein said geared architecture drives a fan section at a speed different than a low speed spool.

12. A method of assembling a gas turbine engine having a front center body support assembly according to any of the preceding claims, the method comprising the steps of:
mounting a flex support (68) within the front center body support (62);
and inserting fasteners (88) into the fastener flange of the front center body support from a forward position of said center body support.

13. The method recited in claim 12 further comprising welding the front center body section (72) to the bearing section (74) at a frustro-conical interface section (76).

14. The method recited in claim 12 or 13 further comprising mounting a geared architecture (48) to the flex support (68).

## Patentansprüche

1. Halterungsbaugruppe des vorderen Zentralkörpers eines Strahltriebwerks (20), wobei die Baugruppe eine Lagerverpackung (66) eines Nummer-Zwei-Lagersystems (38A) und eine Halterung des vorderen Zentralkörpers (62) umfasst, wobei die Halterung des vorderen Zentralkörpers Folgendes umfasst:
einen vorderen Zentralkörperabschnitt (72), der um eine Achse (A) definiert ist;
einen Lagerabschnitt (74), der um die Achse definiert ist;
eine Zentrierfeder (70), die innerhalb der Halterung des vorderen Zentralkörpers montiert ist, wobei die Lagerverpackung (66) an der Zentrierfeder montiert ist;
eine Biegehalterung (68), die innerhalb der Halterung des vorderen Zentralkörpers montiert ist; und
einen kegelstumpfförmigen Schnittstellenabschnitt (76), der um die Achse definiert ist, wobei sich der kegelstumpfförmige Schnittstellenabschnitt zwischen dem vorderen Zentralkörperabschnitt und dem Lagerabschnitt befindet; wobei der vordere Zentralkörperabschnitt (72) Montagemerkmale (78,80) beinhaltet, um die Biegehalterung (68) aufzunehmen,
**dadurch gekennzeichnet, dass** die Montagemerkmale einen Befestigungselementflansch (80) und Befestigungselemente (88) beinhaltet, die in den Befestigungselementflansch (80) eingeschraubt sind, um die Biegehalterung innerhalb der Halterung des vorderen Zentralkörpers zu montieren; wobei auf die Befestigungselemente von einem vorderen Abschnitt der vorderen Zentralkörperbaugruppe gegenüber der Lagerverpackung zugegriffen werden kann.

2. Halterungsbaugruppe des vorderen Zentralkörpers nach Anspruch 1, wobei der vordere Zentralkörperabschnitt (72) an den Lagerabschnitt (74) an einer Schweißnaht (W) innerhalb des kegelstumpfförmigen Schnittstellenabschnitts geschweißt ist.

3. Halterungsbaugruppe des vorderen Zentralkörpers nach Anspruch 1 oder 2, wobei sich der vordere Zentralkörperabschnitt (72) radial auswärts relativ zu dem Lagerabschnitt (74) befindet.

4. Halterungsbaugruppe des vorderen Zentralkörpers nach Anspruch 1, 2 oder 3, wobei der vordere Zentralkörperabschnitt eine Innenverzahnung (78) beinhaltet.

5. Halterungsbaugruppe des vorderen Zentralkörpers nach einem der vorhergehenden Ansprüche, wobei der vordere Zentralkörperabschnitt einen ringförmigen Kanal mit einer Vielzahl von Zentralkörperleitschaufeln (72A, 72B) definiert.

6. Strahltriebwerk (20), umfassend:
die Halterungsbaugruppe des vorderen Zentralkörpers nach einem der vorhergehenden Ansprüche.

7. Strahltriebwerk nach Anspruch 6, ferner umfassend eine Dichtungsverpackung (64), die an der Halterung des vorderen Zentralkörpers montiert ist.

8. Strahltriebwerk nach Anspruch 6 oder 7, wobei die Halterung des vorderen Zentralkörpers einen kegelstumpfförmigen Schnittstellenabschnitt (76) beinhaltet, der um die Achse definiert ist, wobei sich der kegelstumpfförmige Schnittstellenabschnitt zwischen dem vorderen Zentralkörperabschnitt und dem Lagerabschnitt befindet; vorzugsweise
ferner umfassend eine Schweißnaht (W) innerhalb des kegelstumpfförmigen Schnittstellenabschnitts.

9. Strahltriebwerk nach einem der Ansprüche 6 bis 8, wobei die Halterung des vorderen Zentralkörpers eine Innenverzahnung (78) beinhaltet, die mit einer Außenverzahnung (82) an der Biegehalterung (68) eine Schnittstelle bildet; vorzugsweise
wobei die Halterung des vorderen Zentralkörpers einen Innenflansch (80) beinhaltet, der an einen Außenflansch (84) der Biegehalterung angrenzt; ferner vorzugsweise ferner umfassend eine Vielzahl von Befestigungselementen (88), die den Innenflansch an dem Außenflansch anbringt.

10. Strahltriebwerk nach einem der Ansprüche 6 bis 9, wobei die Biegehalterung an einer Zahnradarchitektur (48) montiert ist.

11. Strahltriebwerk nach Anspruch 10, wobei die Zahnradarchitektur einen Gebläseabschnitt mit einer Drehzahl antreibt, die sich von einer Spule mit niedriger Drehzahl unterscheidet.

12. Verfahren zur Montage eines Strahltriebwerks mit einer Halterungsbaugruppe des vorderen Zentralkörpers nach einem der vorhergehenden Ansprüche, wobei das Verfahren die folgenden Schritte umfasst:
Montieren einer Biegehalterung (68) innerhalb der Halterung des vorderen Zentralkörpers (62);
und Einführen von Befestigungselementen (88) in den Befestigungselementflansch der Halterung des vorderen Zentralkörpers von einer vorderen Position der Halterung des vorderen Zentralkörpers.

13. Verfahren nach Anspruch 12, ferner umfassend Schweißen des vorderen Zentralkörperabschnitts (72) an den Lagerabschnitt (74) an einem kegelstumpfförmigen Schnittstellenabschnitt (76).

14. Verfahren nach Anspruch 12 oder 13, ferner umfassend Montieren einer Zahnradarchitektur (48) an die Biegehalterung (68).

## Revendications

1. Ensemble support de corps central avant pour un moteur à turbine à gaz (20), l'ensemble comprenant une garniture de palier (66) d'un système de palier numéro deux (38A) et un support de corps central avant (62), le support de corps central avant comprenant :
une section corps central avant (72) définie autour d'un axe (A) ;
une section palier (74) définie autour dudit axe ;
un ressort de centrage (70) monté à l'intérieur dudit support de corps central avant, la garniture de palier (66) étant montée sur ledit ressort de centrage ;
un support flexible (68) monté à l'intérieur dudit support de corps central avant ; et
une section interface tronconique (76) définie autour dudit axe, ladite section interface tronconique se trouvant entre ladite section corps central avant et ladite section palier ; dans lequel ladite section corps central avant (72) inclut des caractéristiques de montage (78, 80) pour recevoir le support flexible (68),
**caractérisé en ce que** lesdites caractéristiques de montage incluent une bride d'attache (80), et des attaches (88) filetées dans ladite bride d'attache (80) pour monter le support flexible à l'intérieur du support de corps central avant ; dans lequel
lesdites attaches sont accessibles depuis une section avant de l'ensemble corps central avant à l'opposé de la garniture de palier.

2. Ensemble support de corps central avant selon la revendication 1, dans lequel ladite section corps central avant (72) est soudée à ladite section palier (74) au niveau d'une soudure (W) à l'intérieur de ladite section interface tronconique.

3. Ensemble support de corps central avant selon la revendication 1 ou 2, dans lequel ladite section corps central avant (72) est radialement vers l'extérieur par rapport à ladite section palier (74).

4. Ensemble support de corps central avant selon la revendication 1, 2 ou 3, dans lequel ladite section corps central avant inclut une cannelure interne (78).

5. Ensemble support de corps central avant selon une quelconque revendication précédente, dans lequel ladite section corps central avant définit un passage annulaire comportant de multiples pales de corps central avant (72A, 72B) .

6. Moteur à turbine à gaz (20) comprenant :
l'ensemble support de corps central avant selon une quelconque revendication précédente.

7. Moteur à turbine à gaz selon la revendication 6, comprenant en outre une garniture d'étanchéité (64) montée sur ledit support de corps central avant.

8. Moteur à turbine à gaz selon la revendication 6 ou 7, dans lequel ledit support de corps central avant inclut une section interface tronconique (76) définie autour dudit axe, ladite section interface tronconique se trouvant entre ladite section corps central avant et ladite section palier ; de préférence
comprenant en outre une soudure (W) à l'intérieur de ladite section interface tronconique.

9. Moteur à turbine à gaz selon l'une quelconque des revendications 6 à 8, dans lequel ledit support de corps central avant inclut une cannelure interne (78) qui communique avec une cannelure externe (82) sur ledit support flexible (68) ; de préférence
dans lequel ledit support de corps central avant inclut une bride interne (80) qui vient en butée contre une bride externe (84) dudit support flexible ; de préférence
comprenant en outre plusieurs attaches (88) qui relient ladite bride interne à ladite bride externe.

10. Moteur à turbine à gaz selon l'une quelconque des revendications 6 à 9, dans lequel ledit support flexible est monté sur une architecture à engrenages (48).

11. Moteur à turbine à gaz selon la revendication 10, dans lequel ladite architecture à engrenages entraîne une section soufflante à une vitesse différente d'une bobine faible vitesse.

12. Procédé pour assembler un moteur à turbine à gaz ayant un ensemble support de corps central avant selon l'une quelconque des revendications précédentes, le procédé comprenant les étapes consistant à :
monter un support flexible (68) à l'intérieur du support de corps central avant (62) ;
et insérer des attaches (88) dans la bride d'attache du support de corps central avant depuis une position vers l'avant dudit support de corps central.

13. Procédé selon la revendication 12 comprenant en outre le fait de souder la section corps central avant (72) à la section palier (74) au niveau d'une section interface tronconique (76).

14. Procédé selon la revendication 12 ou 13 comprenant en outre le fait de monter une architecture à engrenages (48) sur le support flexible (68).
